# EUROPEAN PATENT APPLICATION

(11) **EP 4 563 451 A1**
(43) Date of publication of application: **04.06.2025**
(21) Application number: 23213146.6
(22) Date of filing: 29.11.2023
(51) Int. Cl.: B62K 25/04

(54) **METHOD, CONTROL SYSTEM AND COMPUTER PROGRAM FOR EVENT-BASED ACTIVE SUSPENSION CONTROL**

(71) Applicant: Öhlins Racing AB, 194 27 Upplands Väsby (SE)
(72) Inventor: SINTORN, Torkel, 185 91 Vaxholm (SE)
(74) Representative: AWA Sweden AB

(57) **Abstract**

The present disclosure relates to a control system (100) for controlling a suspension system (21) of a bicycle (300), the suspension system (21) comprising a front suspension (21F) and a rear suspension (21R). The control system (100) comprises: a control unit (110); at least one sensor (120) connected to said control unit (110), said at least one sensor (120) configured to provide riding event information relating to a riding event of the bicycle (300), wherein the control unit (110) is configured to: determine a target ride state of the bicycle (300) based on said riding event information; send a suspension setting signal to the front suspension (21F) and/or the rear suspension (21R) to adjust the bicycle (300) to the target ride state, wherein said adjustment involves adjusting a spring element (210) of the front suspension (21F) and/or the rear suspension (21R) in terms of spring rate and/or spring preload, wherein said spring element (210) includes: i) a first gas spring, or ii) a first hybrid spring comprising a gas spring and a mechanical spring. A bicycle (300) incorporating the same and a method for controlling a suspension system (21) of a bicycle (300) is also provided.

## Description

### Technical Field

The present disclosure generally relates to the field of systems for controlling suspensions of bicycles, and in particular discloses a control system and method for event-based controlling of front suspension and/or rear suspension of a bicycle.

### Background

The field of mountain bicycles, MTBs, is rapidly improved as new suspension technologies are introduced to the market, thereby improving performance, comfort, and/or safety, both for performance-oriented MTBs and MTBs designed for amateurs in mind. Although these aspects are important for both groups, it is difficult to find the right balance for the individual user. One way of solving this problem is to adapt the MTB suspension system to enable the user to calibrate the suspension system in accordance with the user's own need, which may include e.g., performance, comfort, and safety. A majority of current solutions do not however provide sufficient adjustability to meet these needs, and those which do are typically too complicated to be calibrated without professional assistance. Moreover, the same problem extends to other fields of bicycles.

Hence, there is a need for an improved solution which facilitates adjustment of a suspension system for a bicycle, in particular for an MTB.

### Summary

It is an object of the present invention to provide an improved solution that alleviates at least some drawbacks of present solutions. A first object of the invention is to provide an improved solution for control of a front suspension and/or a rear suspension of a bicycle. This first object is solved by the invention of claim 1. A second object of the invention is to provide an improved solution which facilitates adjustment of a suspension system for a bicycle. This second object is solved by the invention of claim 1. Further aspects of the invention and embodiments thereof are listed in the claims and in the following description.

Conventional bicycle suspensions are typically designed with mechanical springs in mind. A mechanical spring, if adjustable, is typically adjusted in terms of spring preload by adjusting mechanically how much the mechanical spring is compressed for a particular position, such as full extension of a shock absorber. Conventional solutions may for instance enable this by operation of one or more lock rings to adjust relative end locations of a mechanical spring. However, it is typically difficult to adjust a mechanical spring in terms of spring rate and in particular in terms of spring rate and spring preload. Typically, if a different spring rate is desired, a change of mechanical spring is required.

A gas spring however may be adjusted in terms of spring preload by adjusting gas pressure of how much the gas spring is compressed for a particular position, such as full extension of a shock absorber. A gas spring may be further adapted to allow adjustment of spring rate, for instance by means of adjusting one or more valve elements for regulating gas medium flow between gas medium spaces, by means of adjusting a gas space volume for said particular position, etc.

In view of the above, the invention is based on the realization that it is of great importance to find the right balance on the bike, which balance may be e.g., impacted by rider riding the bike and e.g., terrain in which the bike is used. With the correct balance, the geometry of the bike works better from a performance, speed, handling and safety perspective. Improved balance can be achieved by event-based control of spring rate and preload of the spring or springs, and this is more effective than working with the dynamic balance of the bike, e.g. by adjusting the dampening. Thus, an event-based active control system for a bicycle suspension system may be improved by implementing control of a spring element including a gas spring or a hybrid spring comprising a gas spring and a mechanical spring. By such a control system, a bicycle suspension system may be adjusted in terms of spring rate and/or spring preload, and in particular with greater flexibility.

By bicycle balance, it may be meant a geometric balance of the bicycle, e.g., for a particular rider of the bicycle, how the bicycle is oriented relative a horizontal plane and/or a riding surface of the terrain. As such, there may be a desired bicycle balance for any given riding surface, which desired bicycle balance may depend on various factors such as performance, speed, handling, safety, comfort, rider preference etc.

In contrast to bicycle balance, there is dynamic balance. Dynamic balance may be associated with damping adjustments. Damping adjustments may impact bicycle orientation relative a horizontal plane and/or a riding surface during a damping initiating event and a time period thereafter. A damping initiating event may for instance be the bicycle travels on a horizontal riding surface and then interacts with a bump in the riding surface. A damping initiating event may perturb the bicycle from a bicycle orientation associated with the desired bicycle balance. After a certain time period from the damping initiating event, which time period may depend on damping adjustment, the bicycle returns to the bicycle orientation associated with the desired bicycle balance.

In relation to mechanical springs, advantages of gas springs include: an ability to generate greater force in tighter spaces; immediate contact force; greater range of force and stroke options, force is easily adjustable through increase or decrease of pressure; allows adjustment of spring rate and/or spring preload; stepless adjustment of spring rate and/or spring preload. These advantages may be of particular relevance for an event-based active control system for control of a bicycle suspension system, and may be leveraged to a greater extent with a control system adapted for controlling such a spring element. Such a control system is described in the following.

According to a first aspect of the invention, a control system for controlling a suspension system for a bicycle is provided. The suspension system, which the control system is adapted to control, comprises a front suspension and a rear suspension. The control system comprises: a control unit; at least one sensor connected to said control unit, said at least one sensor configured to provide riding event information relating to a riding event of the bicycle. The control unit is configured to: determine a target ride state of the bicycle based on said riding event information. The control unit is further configured to send a suspension setting signal to the front suspension and/or the rear suspension to adjust the bicycle to the target ride state, wherein said adjustment involves adjusting a spring element of the front suspension and/or the rear suspension in terms of spring rate and/or spring preload. Said spring element includes: a first gas spring, or a first hybrid spring comprising a gas spring and a mechanical spring.

By such a control system, an improved solution for control of a front suspension and/or a rear suspension of a bicycle is provided, thereby solving the first object of the invention. A number of advantages is also achieved by such a control system. Since the control system is adapted to control a front suspension and/or a rear suspension comprising a gas spring or a hybrid spring, the control system may control suspension more accurately in response to a riding event of the bicycle, thereby improve in regards of comfort, performance, safety, etc. In particular, since a gas spring or a hybrid spring may allow greater range of adjustability as compared to a mere mechanical spring, the control system allows for more precise suspension control. For instance, for riding events which may in one or more regards be too similar to one other riding event for conventional control systems to detect a difference, the present control system may adjust suspension correctly, which is an advantage over current control systems which typically are not designed to adjust springs at all, only damping/rebound characteristics. Further, since a gas spring or a hybrid spring may allow for faster adjustment, the control system may control suspension more rapidly in response to a riding event of the bicycle. Further, by such a control system, bicycle balance may be adjusted accordingly to a desired bicycle balance for any rider and for any terrain. By adjusting the bicycle to a desire bicycle balance, by means of adjusting the spring element in terms of preload and/or spring rate, it may thereby improve any one of, or more of, performance, speed, handling, comfort, safety, etc.

Moreover, a gas spring or a hybrid spring may be adjusted in a continuous manner, thereby allowing a stepless adjustment of the suspension system. For instance, a gas spring or a hybrid spring allows for easy adjustment of spring rate and/or spring preload, which is otherwise difficult to realize with conventional bicycle suspension systems. For instance, a gas spring or a hybrid spring may in particular be easily controlled using a control system, which makes such springs suitable for active control of bicycle suspension systems. For instance, a gas spring or a hybrid spring may in particular be easily controlled using a control system implementing event-based active control of bicycle suspension systems.

By active control, it may be meant that the invention is adapted for or enables control which implements at least some degree of automated control such that need for human intervention is reduced. It may include complete automation, in which control of the suspension is completely handled by the invention. It may include partial automation, in which control of the suspension is at least partially handled by the invention and some adjustments is handled by a user operating the bicycle.

By event-based active control, it may mean that an active controlling of front suspension and/or rear suspension is based on events. Based on events may include information associated with events, or it may include specific events defined using one or more parameters. For instance, an event may be a bicycle travelling a certain time period in ascent. Then said information may include information indicating the bicycle is travelling a certain time period in ascent. The invention may however be adapted to receiving information of, or determine that, a specific event of the bicycle is travelling a certain time period in ascent.

By spring rate, it may refer to the amount of weight that is needed to compress a spring one distance unit. Hence, spring rate may be characterized in terms of stiffness. By spring preload, it may refer to how much a spring is compressed at full extension of a shock absorber. Spring rate may impact how the bicycle behaves in response to changes in riding surface. Spring preload may impact a ride height of the bicycle. If a spring rate is linear, then the spring rate may be unaffected by preload. If a spring is mounted to respond to impacts at an angle, for instance if a spring is mounted at an angle relative a reference axis of choice, such as a vertical axis, then a spring rate correction for angle mounted may be considered in determining suspension effects of a spring. It is typically desired to be able to change spring rate depending on bicycle weight, user weight, and type of suspension system, and type of biking experience. There exist various models for a desired spring rate in view of one or more parameters, and the control system may be adapted to adjust a bicycle to a target ride state using any of such models.

A riding event may be associated with information of a ride state of the bicycle and/or information of a suspension setting signal to be communicated to a front suspension and/or a rear suspension. Hence, the control system may upon receiving information of a riding event be adapted to know which ride state is a target ride state. The control system may in such a situation not be required to process and solve an optimization problem. However, the control system may be adapted to solve an optimization problem if the control system receives information of a new riding event. By optimization problem, it is meant a problem having a solution which can be optimized, in this case a ride state. It is not necessarily meant that the solution is the most optimal solution but the control system may be adapted to find such an optimal solution.

A gas medium of one or more gas springs or hybrid springs of the present application may include e.g., air, nitrogen, or other suitable gas mediums. Air may be preferred as it is readily available. However, other gas medium may be preferred depending on suspension system and intended use.

The control system may be adapted for controlling a suspension system of a bicycle. Said bicycle may include bicycles provided with front suspension and/or rear suspension. Said bicycle may include bicycles designed to move in response to pedal operation. Said bicycle may include battery assisted bicycles, e.g., electric bicycles or bicycles which can use stored energy to facilitate movement of the bicycle. Said bicycle may include mountain bikes, MTB. However, the invention may be provided to, or applied to, other types of bicycles.

By front suspension, it may refer to suspension arrangement for enabling suspension of a front wheel. For a bicycle, in particular a mountain bike, MTB, a front suspension may include a suspension fork. The suspension fork may comprise one shock absorber or more shock absorbers. The first spring element may thus include a first (front) gas spring or a first (front) hybrid spring associated with said front suspension, which first gas spring or first hybrid spring is controllable by said control system in terms of spring rate and/or spring preload.

By rear suspension, it may refer to suspension arrangement for enabling suspension of a rear wheel. For a bicycle, in particular a mountain bike, MTB, a rear suspension may include a rear shock absorber. A first end of the rear shock absorber may be directly or indirectly connected to a rear wheel. A second end of the rear shock absorber may be directly or indirectly connected to a bicycle frame. The rear shock absorber may be pivotably connected at the first end or the second end. The first spring element may thus include a first (rear) gas spring or a first (rear) hybrid spring associated with said rear suspension, which first (rear) gas spring or first (rear) hybrid spring is controllable by said control system in terms of spring rate and/or spring preload.

The control system comprises a control unit. The control unit may comprise means for: receiving riding event information; and/or processing riding event information; and/or determining control action based on said riding event information; and/or generating a suspension setting signal. Such means may for instance include any of: a processing module, memory module, wired connection means, wireless connection means. The control unit may further comprise a housing for housing one or more components of the control unit. The control unit may be adapted to be mounted to the bicycle. Alternatively, the control unit may be a portable device which may be adapted to communicate with the suspension system, the at least one sensor, and any actuators for adjusting the suspension system.

The control system may be adapted such that connection between two or more components of the control system, the suspension system, or any other components, is a wired connection or a wireless connection. The control system may be adapted such that connection between two or more components of the control system is primarily one of wired connection and wireless connection and secondarily the other of wired connection and wireless connection.

The control system comprises at least one sensor connected to said control unit, said at least one sensor configured to provide riding event information relating to a riding event of the bicycle. Said at least one sensor may include any sensor from which a user operation can be determined or inferred, or any other sensors from which a driving event may be determined or inferred. Said at least one sensor may be connected to said control unit by means of wired connection or wireless connection. Said at least one sensor may be connected to a power source such as a battery.

Riding event information may be any information from which a riding event may be determined or inferred. For instance, it may include speed, location, front suspension state, rear suspension state, bicycle orientation relative to a horizontal plane or a ground surface, etc.. For instance, when a bicycle is travelling in an upwards slope, one or more sensors may provide information relating to that the bicycle is travelling in an upwards slope. The control unit may then determine or infer from said riding event information that the bicycle is experiencing such a riding event.

A riding event may be an event for which a particular suspension setting of front suspension and/or a particular suspension setting of rear suspension of a bicycle is preferable. For instance, a riding event may include the bicycle traveling in an upwards slope, or in a downwards slope, etc.. A riding event may be associated with a time duration, a location, a user, etc.. However, a riding event may include other types of riding events such as: user operation, such as user position relative the bicycle and/or pedaling speed and/or gear switch setting and/or a breaking operation; front suspension state and/or rear suspension state; front suspension fault and/or rear suspension fault; bicycle orientation, such as roll and/or pitch and/or yaw; inclination of riding surface; condition of riding surface; location; ambient temperature; weather condition; time duration.

The control unit is configured to: determine a target ride state of the bicycle based on said riding event information. A ride state may for instance include a front ride height, a rear ride height, front suspension state, rear suspension state, seat post height, etc.. A target ride state of the bicycle may then be a preferred ride state based on riding event information. For instance, when the bicycle is travelling in an upwards slope, a target ride state may include a reduced forward ride height and an increased rear ride height, so as to level out the bicycle with a horizontal plane. However, a target ride state may include other forms of states.

The control unit is further configured to send a suspension setting signal to the front suspension and/or the rear suspension to adjust the bicycle to the target ride state. The suspension setting signal may be an electric signal or any other suitable signal. The control unit may generate the suspension setting signal by means of a signal generator. The suspension setting signal may be generated to carry information of the target ride state or instruction of further adjusting front suspension or rear suspension until target ride state has been reached. The control unit may generate one or more suspension setting signal, each transmitted to the front suspension and the rear suspension, and/or to any subcomponents of the rear suspension and/or the front suspension.

Said adjustment of front suspension and/or rear suspension involves adjusting a spring element of the front suspension and/or the rear suspension in terms of spring rate and/or spring preload. The suspension setting signal may be communicated to one or more actuators for adjusting the spring element in terms of spring rate and/or spring preload.

Said adjustment of front suspension and/or rear suspension can be done to actively adjust the balance of the bike. Having the correct balance will allow the geometry of the bike to work better from a performance, speed, handling and safety perspective. For example, the optimal balance of the bike will vary depending on the current riding event, for example, going uphill vs. going downhill. It has also been realized that adjusting or optimizing the balance could be more effective than adjusting the dynamic balance of the bike, e.g. by adjusting the damping properties.

Spring element may include a first gas spring or a first hybrid spring. The spring element may include a second gas spring or a second hybrid spring. The spring element may include one or more additional springs. Said one or more additional springs may be associated with front suspension or rear suspension. Said one or more additional spring may include one or more mechanical springs. Said one or more additional springs may include one or more gas springs or one or more hybrid springs each comprising a gas spring and a mechanical spring. Said spring element may include one or more springs arranged to cooperate with a damper of the front suspension and/or a damper of the rear suspension. Said one or more additional springs may be arranged to cooperate with said spring element.

Mechanical spring may include compression spring. Alternatively, mechanical spring may include torsion spring, extension spring, and spiral spring, or any other suitable spring. When the invention relates to, or incorporates, two or more mechanical springs, said two or more mechanical springs may be any combination of said mechanical springs. A mechanical spring may for instance be a coil spring or a helical spring, a conical spring, a wave spring, or any other suitable spring.

According to one embodiment, the control unit is configured to determine a current ride state of the bicycle based on: sensor information from one or more sensors, and/or a historic suspension setting signal. The one or more sensors may be arranged to sense one aspect from which a current ride state may be determined. For instance, a sensor may be arranged to sense a suspension setting of the spring element. An advantage of this is that a current ride state may be directly measured. Alternatively, a current ride state may be based on a historic suspension setting signal. This may involve inferring a current ride state based on said historic suspension setting signal, e.g., the control unit determines a ride state based one or more suspension setting signals communicated to the front suspension and/or rear suspension and assumes that, at least after a certain time period, that the front suspension and/or rear suspension has been adjusted in accordance with said one or more suspension setting signals. By this, fewer sensors may need to be incorporated which may results in e.g., a more power efficient system.

According to one embodiment, said target ride state and/or said current ride state includes one or more of: a front suspension sag and/or a rear suspension sag; an orientation of the bicycle relative a horizontal plane; a front compression damping and/or a front rebound damping; a rear compression damping and/or a rear rebound damping.

Sag may refer to how much a suspension system compresses when a user is seated on a bicycle. Sag may be quantified in terms of an absolute distance (in e.g., mm) or in terms of relative distance (as a % of a maximum compression distance). Front suspension sag may refer to how much front suspension sags when a user is seated on a bicycle. Rear suspension sag may refer to how much a rear suspension sags when a user is seated on a bicycle.

Orientation of the bicycle relative a horizontal plane may include roll and/or pitch and/or yaw. Alternatively, said orientation of the bicycle may be relative to a riding surface which may be at an angle relative a horizontal plane. The control system may comprise one or more sensors to measure one or more of said roll and/or pitch and/or yaw relative to a horizontal plane and/or a riding surface.

A shock absorber may be adjusted in terms of damping for compression and/or rebound. A shock absorber of a front suspension may be adjusted to impact front compression damping and/or front rebound damping. A shock absorber of a rear suspension may be adjusted to impact rear compression damping and/or rear rebound damping. The control system may comprise one or more sensors to sense a setting of front suspension and/or rear suspension.

According to one embodiment, the control unit is configured to: determine the target ride state from one or more ride state modes, wherein, optionally, said one or more ride state modes includes one or more of: a predefined ride state mode; a user defined ride state mode; an adaptively defined ride state mode.

By providing one or more ride state modes, it may facilitate the control unit to determine which adjustments are necessary, thereby improving power efficiency. The control system may be adapted to determine a target ride state from said one or more ride state modes based on said riding event information. One or more ride state modes may include adjustments of a plurality of adjustable suspension components including said spring element. Hence, by determining said target ride state from one or more ride state modes, the control system may more quickly determine a desired adjustment of the spring element, and optionally desired adjustments of one or more other suspension elements, and control the spring element and optionally the one or more other suspension elements accordingly. The control system may be adapted to store one or more ride state modes in a memory module and advantageously access these when needed.

A predefined ride state mode may include a ride state mode defined by a manufacturer or a calibrator or the like. The control system may be adapted to store one or more predefined ride state modes in a memory module. A user defined ride state mode may include a ride state mode defined by a user. The control system may be adapted to allow a user to define one or more ride state modes. The control system may be adapted to provide an interface, such as a human machine interface, HMI, through which the user may define one or more ride state modes, alternatively, a user may connect with the control system and update the control system with one or more user defined ride state modes. The control system may store one or more user ride state modes in a memory module. An adaptively defined ride state mode may include a ride state mode which the control system adaptively defines itself based on user operation and/or frequency. The control system may be adapted to include in said one or more ride state modes any combination of predefined ride state modes, user defined ride state modes, and adaptively defined ride state modes, and may determine a target ride state from said one or more ride state modes depending on riding event information.

According to one embodiment, the control unit is configured to: determine a riding event from one or more riding events based on said riding event information, wherein the target ride state of the bicycle is determined based on a determined riding event. By this, the control system may be adapted to determine riding events from one or more riding events based on said riding event information rather than controlling the front suspension and/or the rear suspension using the riding event information directly. By this, the control system may be enabled to identify two riding events which are sufficiently similar in one or more aspects as a same riding event. facilitates the control system to make appropriate suspension adjustment

According to one embodiment, the control unit is configured to: determine a time duration of a riding event, and/or send out said suspension setting signal at least once for a riding event. The control unit may be configured to determine a time duration of a riding event, wherein said time duration is at least 0.1 second, or wherein said time duration is 0.1-0.2 seconds, 0.2-0.3 seconds, 0.3-0.4 seconds, 0.4-0.5 seconds, 0.5-0.6 seconds, 0.6-0.7 seconds, 0.7-0.8 seconds, 0.8-0.9 seconds, 0.9-1.0 seconds, or at least 1 second, or an interval formed from any of said intervals. By the control unit being able to determine a time duration of a riding event with such time resolution, the control system may be more responsive to changes of riding events. The control unit may be configured to send out said suspension setting signal at least once for a riding event. The control unit may be configured to receive a confirmation signal that a suspension setting signal has been sent out correctly. The control unit may be configured to receive a request signal from one or more suspension components including the spring element. The request signal may inform the control unit that a suspension setting of one or more suspension components including the spring element needs to be verified or that a new suspension setting needs to be made. The control unit may be configured to send a suspension setting signal at least once per riding event, multiple times per riding event, or on a request basis. Fewer number of times may reduce power consumption whereas an increased number may result in a more responsive control system. The number of times the control system is adapted to send out one or more suspension setting signal may be adjusted based on desired power settings.

According to one embodiment, the control unit is configured to store: one or more riding events determined from riding event information provided by the at least one sensor, and ride state information associated with said one or more riding events. The control unit may be configured to store said one or more riding events and ride state information in a memory module or any other information herein detailed. The memory module may be a particular memory module incorporated into the control unit or the control system. The control unit may be configured to store said one or more riding events and ride state information in a memory module of a portable computer device, or in a cloud storage via communication means or via said portable computer device.

According to one embodiment, the control unit is configured to: compare the determined riding event with one or more historic riding events to determine if the determined riding event matches with a historic riding event, said matching being made based on a matching condition, and if a match can be identified, provide ride state information associated with the matching historic riding event, and the determining the target ride state of the bicycle is further based on said provided ride state information. Optionally, said comparing the determined riding event with one or more historic events includes geolocating the determined riding event with a historic riding event.

The control unit may be configured to match a riding event with one or more historic riding events using any matching algorithm known in the technical field of matching algorithms. The control unit may be configured to process said riding event and said one or more historic riding events to enable application of said any matching algorithm. As an example, the control unit may be adapted to process riding events to characterize them in a dimensional space, such as a multidimensional space, wherein an event is parametrized as a value in each dimension. For example a first dimension may be a bicycle speed and a second dimension may be a ground surface angle. A first riding event and a second riding event may be compared by comparing the dimensional spaces of the first riding event and the second riding event and determine a match based on a matching condition. A matching condition may for example be if the first riding event and the second riding event a maximum deviation in any dimension does not exceed a threshold value. The threshold value may be selected based on a desired riding event resolution. The threshold value may for instance be 1%, 2%, 3%, 4%, 5%, or any interval formed thereof. Alternatively, a matching condition may be that a value of at least one dimension of a current riding event must exceed a value of the same at least one dimension of a historic riding event.

As stated, optionally, said comparing the determined riding event with one or more historic events includes geolocating the determined riding event with a historic riding event. For instance, a user may ride a bike in a slope with a first front suspension adjustment and/or a first rear suspension adjustment in a first instance and then in a second instance visit the same slope. The control system may then when the user rides the bike in the same slope compare with historic riding events based on geolocation and identify the first instance.

According to one embodiment, the control unit is configured to: evaluate a setting of the spring element for a matched historic riding event in at least one aspect, which at least one aspect optionally includes one or more of: i) riding performance, and/or ii) suspension characteristics, and/or iii) user preference, and/or iv) comfort, and/or v) safety, wherein the control unit is further configured to: suggest an adjustment of the spring element setting for the determined riding event based on said evaluation, and/or automatically adjust the spring element setting for the identified riding event based on said evaluation. By this, the control system may allow improvements in the at least one aspect over time. The control unit may be configured to perform said evaluation when a user is not operating said bicycle, for instance when parked or placed in temporary storage. By this, the control unit can focus on the task of said evaluation. Alternatively, the control unit may be configured to send riding event information and/or ride state information to an external computing device to perform said evaluation and update the control unit accordingly with said evaluation and/or a suggested adjustment and/or an automatic adjustment.

According to one embodiment, riding event information includes one or more of: user information; user operation, such as user position relative the bicycle and/or pedaling speed and/or gear switch setting and/or a breaking operation; front suspension state and/or rear suspension state; front suspension fault and/or rear suspension fault; bicycle orientation, such as roll and/or pitch and/or yaw; inclination of riding surface; condition of riding surface; location; ambient temperature; weather condition; time duration. The control system may comprise one or more sensors to sense each respective quantity above. The control system may be adapted to receive input from one or more sensors configured to sense a respective quantity above. By configuring the control system to consider any of this information, improved adjustments of a bicycle can be made.

According to one embodiment, said adjustment of the spring element includes one of, or a combination of: controlling a regulating valve between the spring element and a gas reservoir; controlling a compressor connected to the spring element; controlling a preload actuator to adjust i) gas volume of the spring element, and/or ii) a mechanical spring preload in the case the spring element includes a first hybrid spring; controlling a link arrangement actuator for adjusting a setting of a link arrangement to which the spring element is connected. By this, the spring element may be adjusted in various ways.

According to one embodiment, the control system further comprises: at least one actuator for adjusting the spring rate and/or the spring preload of the spring element. The at least one actuator may include one or more electromechanical actuators which in response to an electrical signal make actuate an adjustment of the spring element. The control system may comprise one or more actuators for adjusting any other adjustable component of the suspension system.

According to one embodiment, the control system is further configured to adjust the spring element to compensate for gas medium in the spring element being heated during use. When heated, the pressure in a gas medium increases. Thus, the behavior of a gas spring or a hybrid spring may change over time. Hence, by adjusting the spring element to compensate for this effect, a desired behavior may be achieved for the spring element.

According to one embodiment, said spring element includes: i) a second gas spring, or ii) a second hybrid spring comprising a gas spring and a mechanical spring, wherein the first gas spring or first hybrid spring is associated with one of the front suspension and the rear suspension of the bicycle and the second gas spring or second hybrid spring is associated with the other of the front suspension and the rear suspension of the bicycle. The front suspension may comprise a front gas spring or a front hybrid spring. The rear suspension may comprise a rear gas spring or a rear hybrid spring. By being adapted to control both a front gas/hybrid spring and a rear gas/hybrid spring, the control system may advantageously enable improved adjustments for enhanced comfort, performance, safety, etc..

According to one embodiment, the control system further comprises: at least one actuator for adjusting an additional suspension setting of the front suspension, and/or at least one actuator for adjusting an additional suspension setting of the rear suspension, and/or at least one actuator for adjusting a setting of a seat post. By this, the control system may improve adjustments further, and enhance comfort, performance, safety, etc..

According to one embodiment, the control system is further adapted such that one or more actuators of the control system is capable of maintaining its position in a non-energized state. By this, power consumption may be reduced since an actuator need not be energized in order for it to maintain its position.

According to one embodiment, said at least one sensor includes one or more of: an Inertial Measurement Unit, IMI; a Global Positioning System, GPS; a gear switch sensor for sensing a gear switch setting; a pedal torque sensor for sensing a pedal torque; a seat post sensor for sensing a seat post position; a spring element sensor for sensing a setting of the spring element; a sensor for sensing an additional front suspension setting; a sensor for sensing an additional rear suspension setting; a temperature sensor or a pressure sensor for sensing a gas medium state of the gas medium of the spring element; a proximity sensor for sensing a user or a portable user device in proximity of the control system. By this, the control system may sense a desired property of the suspension system or of the bicycle as a whole, and may then control the suspension system accordingly. The IMU may comprise at least one of, or any combination of, an accelerometer, a gyroscope, and a magnetometer.

According to one embodiment, the control system comprises a Human Machine Interface, HMI, connected to said control unit, wherein said HMI is configured to: present information about a current ride state, and/or present information about the target ride state, and/or be used for controlling the control system. The HMI may be adapted to be interactive. The HMI may be adapted to be used for making adjustment of the suspension system. The HMI may be adapted to present information to a user such as a current ride state; and/or a target ride state, and/or any other information herein disclosed. According to one embodiment, the HMI comprises a display, such as a touch screen. According to one embodiment, the control system comprises connection means for connecting to a portable user device, and optionally the control system is configured such that the portable user device can be used as a Human Machine Interface, HMI.

According to a second aspect of the invention, a suspension system for a bicycle is provided. The suspension system comprises: front suspension; rear suspension, a spring element including a gas spring, or a hybrid spring comprising a gas spring and a mechanical spring, which spring element is configured to be adjustable in terms of spring rate and/or spring preload; a control system according to the first aspect or any embodiments thereof.

According to a third aspect of the invention, a bicycle is provided. The bicycle comprises front suspension; rear suspension, a spring element including a gas spring, or a hybrid spring comprising a gas spring and a mechanical spring, which spring element is configured to be adjustable in terms of spring rate and/or spring preload; a control system according to the first aspect or any embodiments thereof.

According to a fourth aspect of the invention, a method is provided of controlling a suspension system of a bicycle, wherein said suspension system includes front suspension and/or rear suspension. The method comprises the steps of: determining a target ride state for the bicycle based on riding event information provided by at least one sensor; by means of a control unit, sensing a suspension setting signal to the front suspension and/or the rear suspension to adjust the bicycle to the target ride state, wherein said adjustment involves adjusting a spring element of the front suspension and/or the rear suspension in terms of spring rate and/or spring preload, wherein said spring element includes: i) a first gas spring, or ii) a first hybrid spring comprising a gas spring and a mechanical spring.

According to one embodiment, the method comprises the steps of controlling a suspension system of a bicycle, wherein said suspension system is a suspension system according to the third aspect or any embodiments thereof.

According to a fifth aspect of the invention, a computer program is provided. The computer program comprises instructions which, when the program is executed by a computer, cause the computer to carry out the method according to the fourth aspect or any embodiments thereof.

According to a sixth aspect of the invention, a computer-readable storage medium is provided. The computer-readable storage medium comprises instructions which, when executed by a computer, cause the computer to carry out the method according to the fourth aspect or any embodiments thereof.

Effects and features of the second aspect, third aspect, fourth aspect, fifth aspect, sixth aspect, are largely analogous to those described above in connection with the first aspect. Embodiments mentioned in relation to the first aspect are largely compatible with the second aspect, third aspect, fourth aspect, fifth aspect, sixth aspect. It is further noted that the inventive concepts relate to all possible combinations of features unless explicitly stated otherwise.

It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief Description of the Drawings

The invention will in the following be described in more detail with reference to the enclosed drawings, wherein:
Figs. 1a-1b show a schematic illustration of a control system for controlling a spring element of a suspension system for a bicycle;
Fig. 2 shows a schematic illustration of a control system according to one embodiment of the invention and a bicycle;
Fig. 3 shows a schematic illustration of a spring element according to one embodiment of the invention;
Fig. 4 shows a schematic illustration of a spring element according to one embodiment of the invention;
Fig. 5 shows a schematic illustration of a spring element according to one embodiment of the invention;
Fig. 6 shows a schematic illustration of a function of the invention according to one embodiment;
Fig. 7 shows a schematic illustration of a function of the invention according to one embodiment;
Fig. 8 shows a schematic illustration of a function of the invention according to one embodiment;
Figs. 9a-9b show representations of a historic riding event and a current riding event according to one embodiment of the invention;
Fig. 10 shows a schematic illustration of some components of the control system according to one embodiment of the invention;
Fig. 11 shows a schematic illustration of some components of the control system according to one embodiment of the invention;
Fig. 12 show a flow chart of a method for controlling a suspension system of a bicycle according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

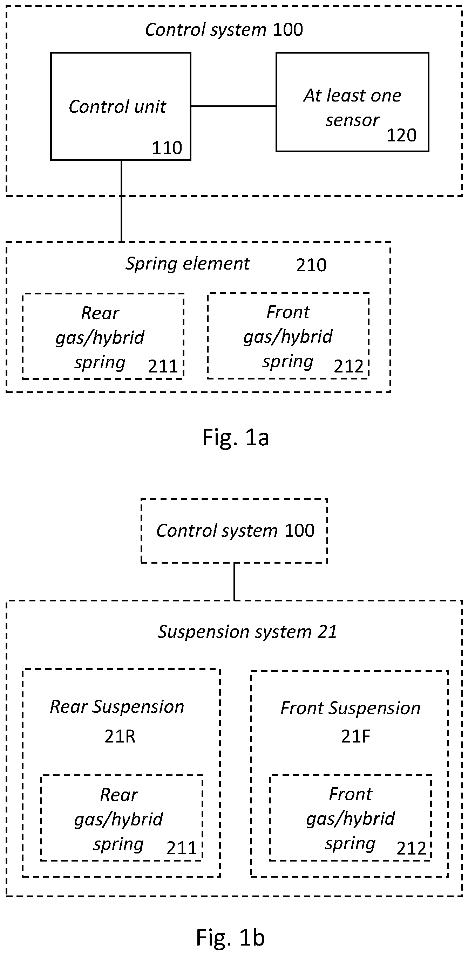

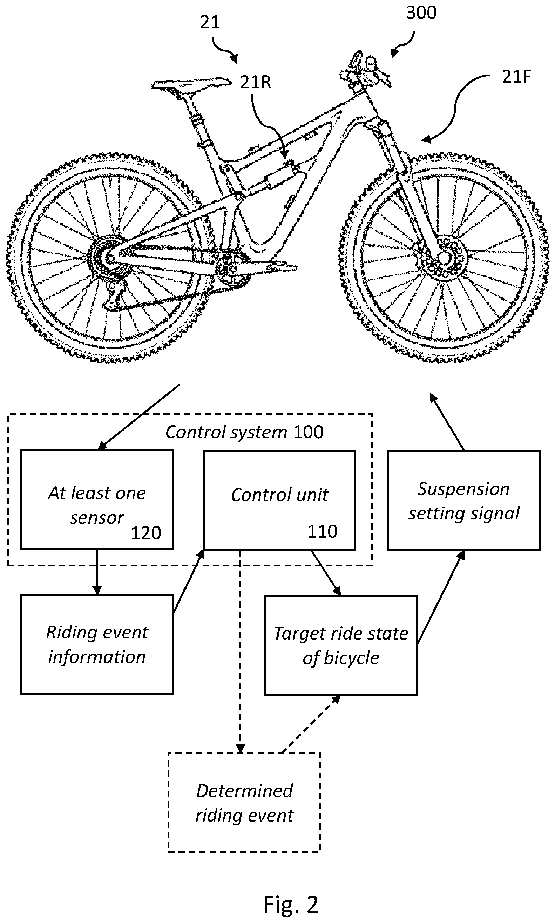

Figure 1a, 1b and 2 show schematic illustrations of a control system 100 for controlling a suspension system 21 for a bicycle 300. The control system 100 comprises a control unit 110. The control system 100 comprises at least one sensor 120. The at least one sensor 120 is connected to said control unit 110. The at least one sensor 120 is configured to provide riding event information relating to a riding event of the bicycle 300. The control unit 110 is configured to: determine a target ride state of the bicycle based on said riding event information. The control unit 110 is configured to send a suspension setting signal to the front suspension 21F and/or the rear suspension 21R to adjust the bicycle to the target ride state. Said adjustment involves adjusting a spring element 210 of the front suspension 21F and/or the rear suspension 21R in terms of spring rate and/or spring preload. The spring element 210 includes i) a first gas spring, or ii) a first hybrid spring comprising a gas spring and a mechanical spring.

The control system 100 may, since it is adapted to control a front suspension 21F and/or a rear suspension 21R of a bicycle 300, which front suspension and/or rear suspension comprises a gas spring or a hybrid spring, control suspension more accurately in response to a riding event of the bicycle 300, thereby advantageously improve in regards of comfort, performance, safety, etc..

A first gas spring or a first hybrid spring may be arranged in, or associated with, front suspension 21F of a bicycle 300. In such a case, the first gas spring or the first hybrid spring may be referred to as a front gas spring 212 or a front hybrid spring 212 respectively. The first gas spring or the first hybrid spring may be arranged in, or associated with, rear suspension 21R of a bicycle 300. In such a case, the first gas spring or the first hybrid spring may be referred to as a rear gas spring 211 or a rear hybrid spring 211. The spring element 210 may comprise a first gas spring or a first hybrid spring and a second gas spring or a second hybrid spring. One of the first gas/hybrid spring and the second gas/hybrid spring may be arranged in, or associated with, a front suspension 21F and the other of the first gas/hybrid spring and the second gas/hybrid spring may be arranged in, or associated with, a rear suspension 21R. These may then be referred to as front gas/hybrid spring 212 and rear gas/hybrid spring 211 respectively. The control system 100 may be adapted to control gas springs and hybrid springs according to various designs. In the following, however, two schematic examples are provided.

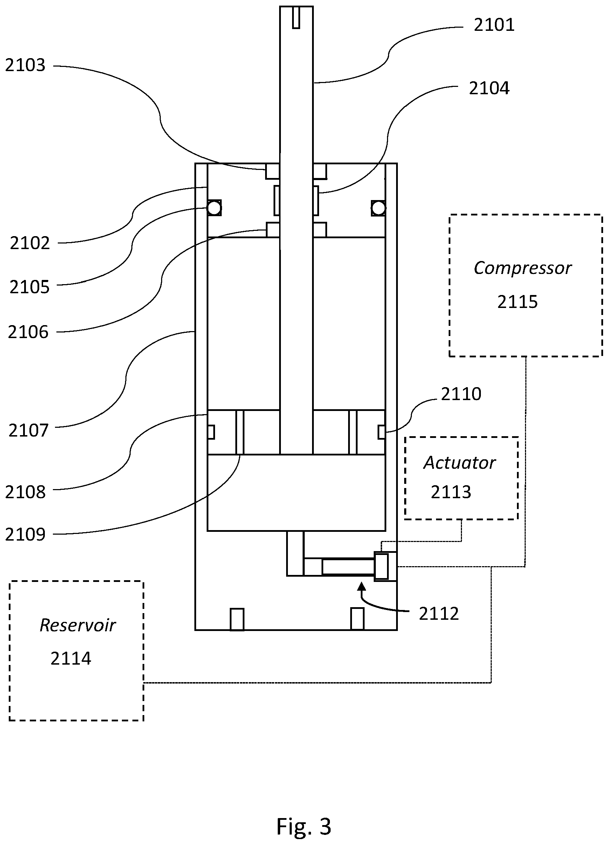

An example gas spring is schematically illustrated in Fig.3. The gas spring comprises a cylinder 2107 and a piston 2108 arranged to move therein along a longitudinal axis of the cylinder 2107. The piston divides an interior space of the cylinder 2107 in a rebound side space and a compression side space. The piston 2109 may comprise one or more channels extending through the piston 2109 and connecting the compression side space and the rebound side space. The piston 2109 may be connected to a piston rod 2101 extending out of the cylinder 2107. The gas spring may comprise a head cap 2102 for closing an end of the cylinder 2107. The gas spring may comprise a piston rod wiper 2103. The gas spring may comprise a piston rod guide bushing 2104. The gas spring may comprise an O-ring 2105. The gas spring may comprise a piston rod seal 2106. The gas spring may comprise a piston guide bushing 2110. The gas spring may comprise a valve 2112. The valve 2112 may be adjustable between a closed state and an open state. A gas pressure of the gas spring may be adjusted by supplying a gas medium or removing gas medium via the valve 2112. The gas medium may for instance be air. The gas medium may be other gas mediums.

The gas spring may comprise an actuator 2113 for adjusting the valve 2112 between the open state and the closed state. The control system 100 may be configured to control the actuator 2113 to actuate the valve 2112 between the open state and the closed state. The valve 2112 may be connected to a reservoir 2114. By operating the valve 2112, gas medium may flow between the gas spring and the reservoir. The reservoir 2114 may comprise a floating piston to divide a space into a first reservoir space and a second reservoir space. The gas pressure in the first reservoir space and the second reservoir space may be adjusted by the control system 100 via one or more actuators and/or pressure regulating means. The valve 2112 may be connected to a compressor 2115, which may be an external compressor or a compressor arranged on the bicycle.

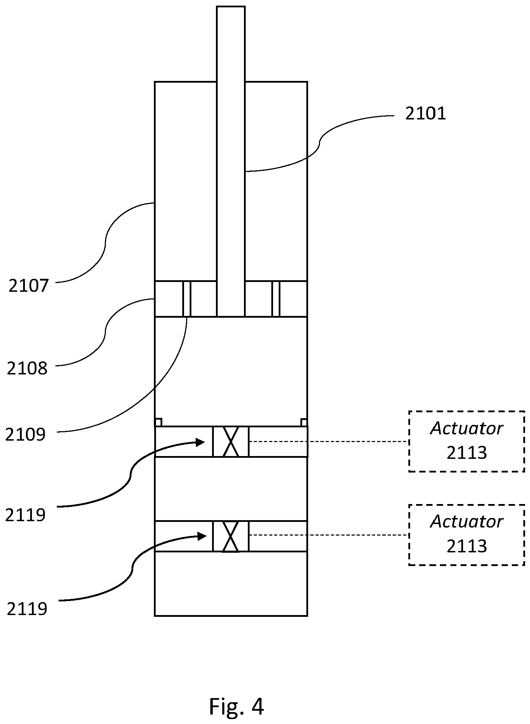

The gas spring may comprise one or more valves 2119, which may be adjusted between an open and closed space, to connect the rebound gas space and/or the compression gas space to one or more auxiliary gas spaces. In Fig. 4, two such valves 2119 are arranged to be able to expand or reduce a compression gas space in two stages. By this, it may enable adjustment of available volume for the gas medium of the gas spring, thereby expanding or reducing the rebound gas space and/or the compression gas space. By this, suspension characteristics such as spring rate and/or spring preload of the gas spring may be adjusted without adjusting the amount of gas medium present in the gas spring. Expanding a compression gas space and/or rebound gas space may be enabled by e.g., connecting the compression gas space and/or rebound gas space via valves to one or more additional spaces arranged longitudinally or radially from the compression gas space and/or rebound gas space.

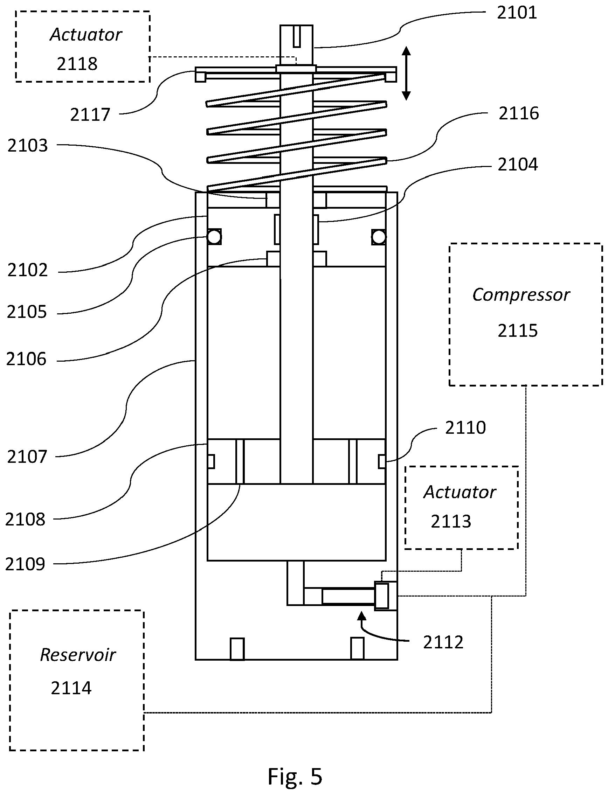

An example hybrid spring is schematically illustrated in Fig. 5. The hybrid spring comprises a gas spring and a mechanical spring. The gas spring may be adapted with any functionality or features of the gas spring discussed in relation to Fig. 3 and 4. The mechanical spring 2116 may be a coil spring. An end of the mechanical spring may be adjusted relative the piston rod to adjust preload. Said end of the mechanical end may abut an end positioning member 2117. An actuator 2118 may control the end positioning member 2117 relative the piston rod to adjust the preload of the spring. By adapting the control system 100 to control a hybrid spring in a front suspension and/or a rear suspension of a bicycle, the control system 100 may improve comfort, performance, safety etc. of a bicycle to a greater extent.

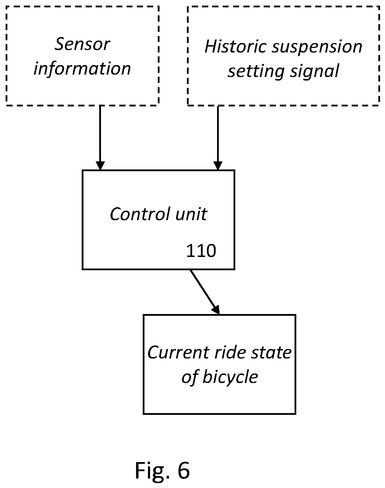

As shown in Fig. 6, the control unit 110 may be configured to determine a current ride state of the bicycle based on sensor information from one or more sensors. The control unit 110 may be configured to determine a current ride state of the bicycle based on historic suspension setting signal. The control unit 110 may be configured to determine a current ride state of the bicycle based on sensor information from one or more sensors and based on a historic suspension setting signal. This may allow the control system 100 to more accurately determine adjustments to the front suspension and/or rear suspension.

The target ride state and/or the current ride state may include one or more of: a front suspension sag and/or a rear suspension sag; an orientation of the bicycle relative a horizontal plane; a front compression damping and/or a front rebound damping; a rear compression damping and/or a rear rebound damping.

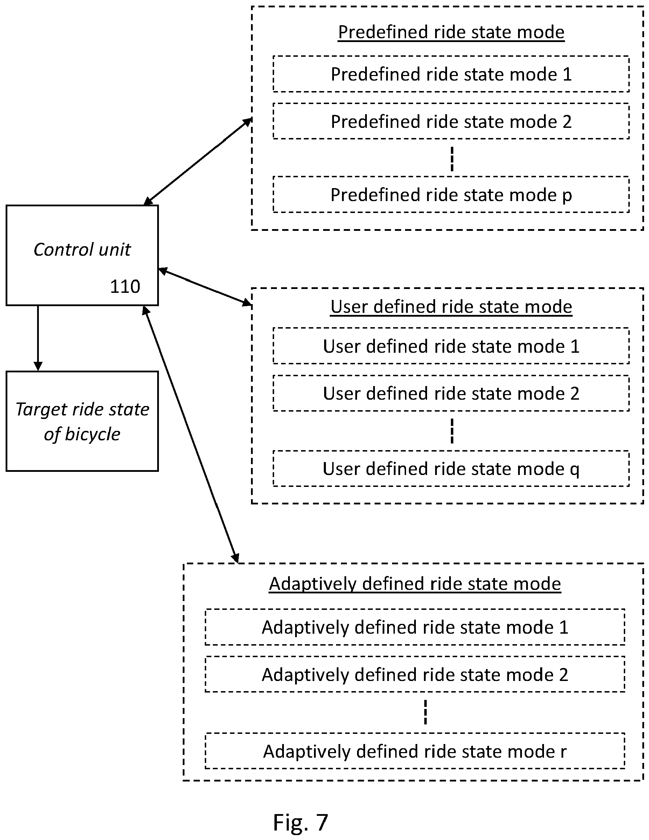

The control unit 110 may be configured to determine the target ride state from one or more ride state modes. Said one or more ride state modes may include one or more of: a predefined ride state mode; a user defined ride state mode; an adaptively defined ride state mode. Fig. 7 illustrates the control unit 110 selecting the target ride state mode from a list of p predefined ride state modes, a list of user defined ride state modes, and a list of adaptively defined ride state modes. Predefined ride state modes may be predefined before operation of the bicycle during normal use or during performance use. User defined ride state modes may be defined by a user. Adaptively defined ride state modes may be defined by the control system based on use of the bicycle. The control system 100 may be adapted to allow any of said predefined ride state modes, user defined ride state modes, or adaptively defined ride state modes, or any combination thereof.

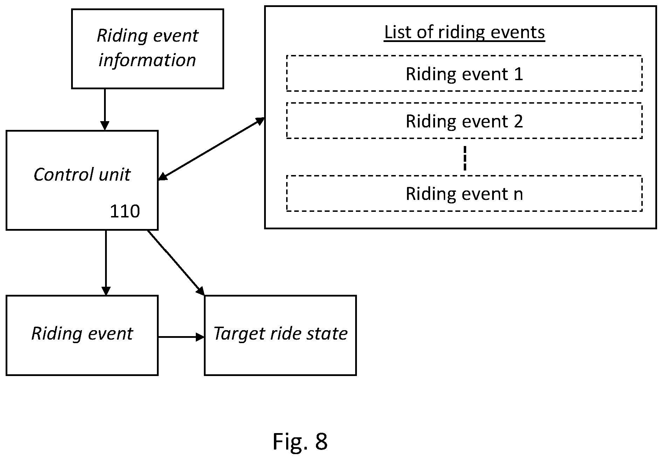

As illustrated in Fig. 2 and Fig. 8, the control unit 110 may be configured to determine a riding event from one or more riding events based on said riding event information. Said target ride state of the bicycle may be determined based on a determined riding event. The control system 100 may be configured with a list of predefined riding events and compare riding events based on riding event information with said list of predefined riding events and determine a riding event as one particular riding event in the list of riding events based on similarity of a riding event and anyone riding event in the list of riding events. Each riding event may be characterized using one or more parameters. Said one or more parameters may e.g., correspond to one or more sensor measurements. The control unit 110 may be configured to update the list of predefined riding events. The control unit 110 may be configured to update the list of predefined riding events based on user input, or based on identifying new riding events which are not listed in the list of predefined riding events. The control unit 110 may be configured to be able to identify new riding events and determine a target ride state thereof. The control unit 110 may be configured to update said list with said new identified riding event. The control unit 110 may update a list of ride state with the determined ride state for the new identified riding event. The control unit may be configured to associate each riding event with a target ride state.

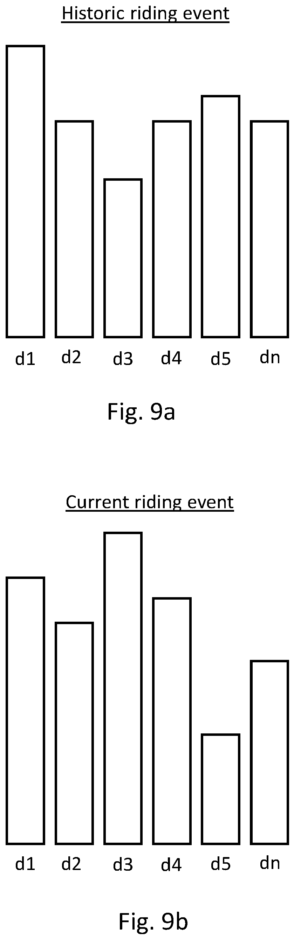

Figs. 9a-9b show a historic riding event and a current riding event, respectively, which are characterized using parameter values in a plurality of dimensions, d1-dn. Each dimension may correspond to a sensor measurement, such as bicycle speed, orientation of the bicycle (yaw, pitch, roll), pedal speed, front suspension parameter, rear suspension parameter, etc. The control unit 110 may be configured to compare a parameter value of each dimension of the current riding event with a corresponding parameter value of each dimension of the historic riding event and determine a match if a sufficiently similar historic riding event may be determined. Sufficiently similar may include a matching condition, e.g., that a match is determined if one or more parameter values deviate less than a threshold value in said dimensions d1-dn.

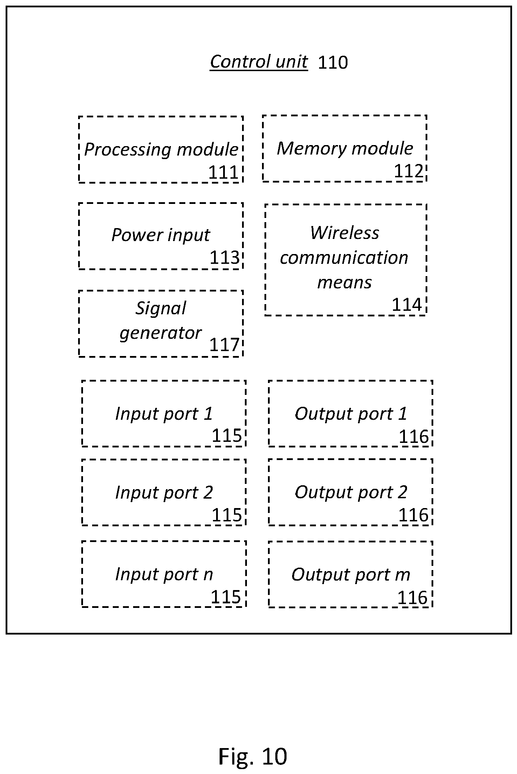

Fig. 10 shows a schematic illustration of the control unit 110. The control unit 110 may comprise a processing module 111 for processing sensor information and determining one or more processing steps for adjusting front suspension and/or rear suspension. The control unit may comprise a memory module 112 for storing one or more riding events determined from riding event information, and/or ride state information associated with said one or more riding events, and/or other relevant information. The control unit 110 may comprise a power input. A power source may be connected to said power input to power the control unit. Said power source may be a battery. Said power source may be chargeable. Said power source may be chargeable be means of a generator connected to the pedals of the bicycle. The control unit may comprise wireless communication means for communicating wirelessly with one or more components of the control system and/or the suspension system of the bicycle. The control unit 110 may comprise one or more input ports 115, such as input port 1, input port 2, input port n, to connect to one or more components of the control system 100 and/or the suspension system to receive an input. The control unit 110 may be adapted to process said input and generate a suspension setting signal. The control unit 110 may comprise one or more output ports 116, such as output port 1, output port 2, output port m, via which the suspension setting signal is communicated to one or more components of the control system 100 and/or the suspension system of the bicycle. The control unit 110 may comprise a signal generator 117 for generating a suspension setting signal.

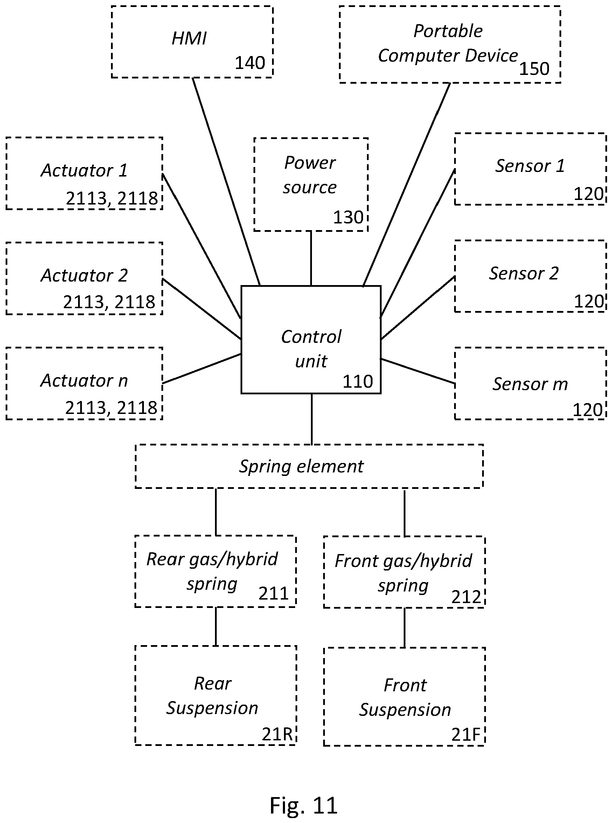

Fig. 11 show a schematic illustration of the control unit 110. The control unit 110 may be adapted to communicate with one or more sensors 120 to receive one or more sensor measurements. Said riding event information may include said one or more sensor measurements. The control unit 110 may receive riding event information via one or more input ports. The control unit 110 may be powered by a power source 130, such as a battery. The control unit 110 may be adapted to determine a target ride state based on said riding event information and generate one or more suspension setting signals. Said one or more suspension setting signals may be communicated to the spring element to adjust the spring element thereof. The one or more suspension setting signals may be communicated to one or more actuators 2113, 2118, such as actuator 1, actuator 2, actuator n, to adjust one or more additional suspension settings of the suspension system of the bicycle to adjust the bicycle to a target ride state. The spring element may comprise a rear gas/hybrid spring 211 associated with a rear suspension 21R. The spring element 211 may comprise a front gas/hybrid spring 212 associated with a front suspension 21F. The control unit 110 may be adapted to control the front gas/hybrid spring 212 and/or the rear gas/hybrid spring 211 to adjust spring rate and/or spring preload.

The control system 100 may be adapted so that the control unit 110 may improve comfort, performance, safety, etc. over time. The control unit 110 may be configured to evaluate a setting of the spring element 110 for a matched historic riding event in at least one aspect. The control unit 110 may be configured to suggest an adjustment of the spring element setting for the determined riding event based on said evaluation. The control unit 110 may be configured to automatically adjust the spring element setting for the identified riding vent based on said evaluation. Said evaluation may be based on one or more aspects, which one or more aspects includes one or more of: riding performance, suspension characteristics, user preference, comfort, safety.

Riding event information may include one or more of: user information; user operation, such as user position relative the bicycle and/or pedaling speed and/or gear switch setting and/or a breaking operation; front suspension state and/or rear suspensions state; front suspension fault and/or rear suspension fault; bicycle orientation, such as roll and/or pitch and/or yaw; inclination of riding surface; condition of riding surface; location; ambient temperature; weather condition; time duration, etc.. Riding event information may include other information.

As shown in Figs. 3-5, the control system 100 may be adapted to adjust the suspension system of the bicycle so that an adjustment of the spring element 210 includes one of, or a combination of: controlling a regulating valve 2112 between the spring element 210 and a gas reservoir 2114; controlling a compressor 2115 connected to the spring element; controlling a preload actuator to adjust: i) gas volume of the spring element 210, and/or a mechanical spring preload in the case the spring element includes a first hybrid spring. The control system 100 may be adapted to adjust the suspension system so that an adjustment of the spring element 210 includes controlling a link arrangement actuator for adjusting a setting of a link arrangement to which the spring element is connected.

The control system 100 may comprise at least one actuator 2113, 2118 for adjusting the spring rate and/or the spring preload of the spring element. The control system may further comprise at least one actuator for adjusting an additional suspension setting of the front suspension, and/or at least one actuator for adjusting an additional suspension setting of the rear suspension and/or at least one actuator for adjusting a setting of a seat post. The control system may be adapted such that one or more actuators of the control system is capable of maintaining its position in a non-energized state.

As a further option, the control system 100 may be configured to adjust the spring element 210 to compensate for gas medium in the spring element being heated during use. This may advantageously result in that a particular suspension characteristics is achieved even following prolonged use of the bicycle.

The at least one sensor may include one or more of: an inertial measurement unit, IMU; a global positioning system, GPS; a gear switch sensor for sensing a gear switch setting, or a change thereof; a pedal torque sensor for sensing a pedal torque; a seat post sensor for sensing a seat post position or a change thereof; a spring element sensor for sensing a setting of the spring element or a change thereof; a sensor for sensing an additional rear suspension setting or a change thereof; a temperature sensor or a pressure sensor for sensing a gas medium state of the gas medium of the spring element; a proximity sensor for sensing a user or a portable user device in proximity of the control system.

The control system may further comprise a Human Machine Interface, HMI, connected to said control unit, wherein said HMI is configured to: present information about a current ride state, and/or present information about the target ride state, and/or be used for controlling the control system. The HMI may comprise a display, such as a touch screen. The control system may be adapted to comprise connection means for connecting to a portable computer device, and optionally the control system is configured to allow the portable user device to be used as a Human Machine Interface, HMI.

The control system 100 may be at least partially arranged to a bicycle to control a suspension system thereof. The control unit 110 may also be a component mounted onto the bicycle. The control unit 11 may be represented by a portable computer device provided with software for controlling the suspension system in accordance with the invention disclosed herein.

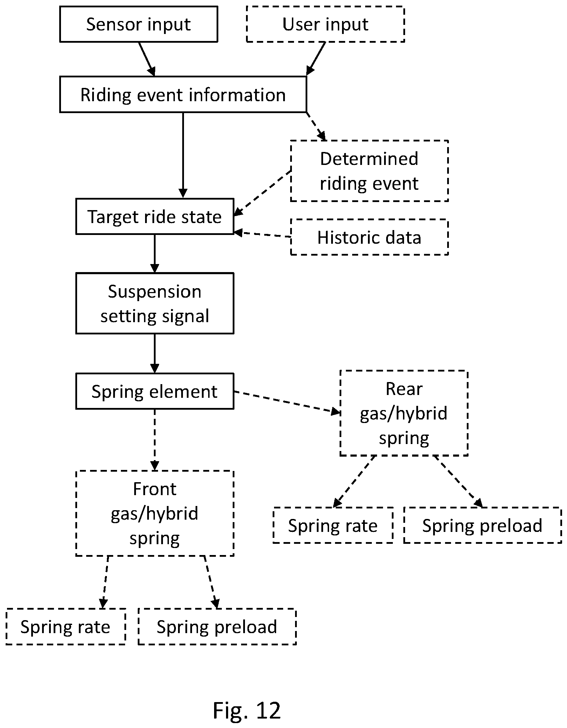

The invention also relates to a method of controlling a suspension system 21 of a bicycle 300. Said suspension system includes front suspension 21F and/or rear suspension 21R. As shown in Fig. 12, the method may comprise: determining a target ride state for the bicycle based on sensor input relating to riding event information provided by at least one sensor; by means of a control unit 110, sending a suspension setting signal to the front suspension and/or the rear suspension to adjust the bicycle to the target ride state, wherein said adjustment involves adjusting a spring element 210 of the front suspension and/or the rear suspension in terms of spring rate and/or spring preload, wherein said spring element includes a first gas spring, or a first hybrid spring comprising a gas spring and a mechanical spring. By this, the method may allow for more responsive adjustment of a suspension system in response to riding event information or riding event and improve with regards to comfort, performance, safety, etc.. The method may comprise determining a riding event from said riding event information. This may for instance be performed in accordance with the various options detailed previously with regards to the control system. The control unit may determine a target ride state based on said determined riding event. This may for instance be performed in accordance with the various options detailed previously with regards to the control system. The method may comprise determining a target ride state based on historic data. This may for instance be performed in accordance with the various options detailed previously with regards to the control system. The riding event information may also incorporate user input.

The method may involve adjusting a front gas/hybrid spring in terms of spring rate and/or spring preload. The method may involve adjusting rear gas/hybrid spring in terms of spring rate and/or spring preload. This allows for adjustment of a bicycle to an advantageous ride state so that e.g., comfort, performance, safety, etc. is improved.

In the drawings and specification, there have been disclosed preferred embodiments and examples of the invention and, although specific terms are employed, they are used in a generic and descriptive sense only and not for the purpose of limitation. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

Moreover, features illustrated or described as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter.

While the foregoing is directed to embodiments of the disclosure, other and further embodiments may be devised without parting from the inventive concept discussed herein. The scope of the invention is set forth in the following claims.

### ITEMIZED LIST OF EMBODIMENTS

1. Control system (100) for controlling a suspension system (21) for a bicycle (300), the suspension system (21) comprising a front suspension (21F) and a rear suspension (21R), said control system (100) comprising:
   - a control unit (110);
   - at least one sensor (120) connected to said control unit (110), said at least one sensor (120) configured to provide riding event information relating to a riding event of the bicycle (300),
   wherein the control unit (110) is configured to:
   - determine a target ride state of the bicycle (300) based on said riding event information,
   - send a suspension setting signal to the front suspension (21F) and/or the rear suspension (21R) to adjust the bicycle (300) to the target ride state, wherein said adjustment involves adjusting a spring element (210) of the front suspension (21F) and/or the rear suspension (21R) in terms of spring rate and/or spring preload, wherein said spring element (210) includes
      i) a first gas spring, or
      ii) a first hybrid spring comprising a gas spring and a mechanical spring.
2. Control system (100) according to embodiment 1, wherein the control unit (110) is configured to determine a current ride state of the bicycle (300) based on:
   - sensor information from one or more sensors, and/or
   - a historic suspension setting signal.
3. Control system (100) according to any of embodiments 1-2, wherein said target ride state and/or said current ride state includes one or more of:
   - a front suspension sag and/or a rear suspension sag;
   - an orientation of the bicycle (300) relative a horizontal plane;
   - a front compression damping and/or a front rebound damping;
   - a rear compression damping and/or a rear rebound damping.
4. Control system (100) according to any preceding embodiments, wherein the control unit (110) is configured to:
   - determine the target ride state from one or more ride state modes.
5. Control system (100) according to embodiment 4, wherein said one or more ride state modes includes one or more of:
   - a predefined ride state mode;
   - a user defined ride state mode;
   - an adaptively defined ride state mode.
6. Control system (100) according to any of the preceding embodiments,
   wherein the control unit (110) is configured to:
      - determine a riding event from one or more riding events based on said riding event information,
   wherein the target ride state of the bicycle (300) is determined based on a determined riding event.
7. Control system (100) according to embodiment 6, wherein the control unit (110) is configured to:
   - determine a time duration of a riding event, and/or
   - send out said suspension setting signal at least once for a riding event.
8. Control system (100) according to any of embodiments 6-7, wherein the control unit (110) is configured to store:
   - one or more riding events determined from riding event information provided by the at least one sensor, and
   - ride state information associated with said one or more riding events.
9. Control system (100) according to embodiment 8, wherein the control unit (110) is configured to:
   - compare the determined riding event with one or more historic riding events to determine if the determined riding event matches with a historic riding event, said matching being made based on a matching condition, and
   - if a match can be identified, provide ride state information associated with the matching historic riding event, and the determining the target ride state of the bicycle is further based on said provided ride state information.
10. Control system (100) according to embodiment 9, wherein said comparing the determined riding event with one or more historic riding events includes geolocating the determined riding event with a historic riding event.
11. Control system (100) according to any of embodiments 9-10, wherein the control unit (110) is configured to:
   - evaluate a setting of the spring element (210) for a matched historic riding event in at least one aspect, which at least one aspect optionally includes one or more of: i) riding performance, and/or ii) suspension characteristics, and/or iii) user preference, and/or iv) comfort, and/or v) safety,
   wherein the control unit (110) is further configured to:
   - suggest an adjustment of the spring element setting for the determined riding event based on said evaluation, and/or
   - automatically adjust the spring element (210) setting for the identified riding event based on said evaluation.
12. Control system (100) according to any preceding embodiments, wherein riding event information includes one or more of:
   - user information;
   - user operation, such as user position relative the bicycle (300) and/or pedaling speed and/or gear switch setting and/or a breaking operation;
   - front suspension state and/or rear suspension state;
   - front suspension fault and/or rear suspension fault;
   - bicycle orientation, such as roll and/or pitch and/or yaw,
   - inclination of riding surface;
   - condition of riding surface;
   - location;
   - ambient temperature;
   - weather condition;
   - time duration.
13. Control system (100) according to any preceding embodiments, wherein said adjustment of the spring element (210) includes one of, or a combination of:
   - controlling a regulating valve (2112) between the spring element (210) and a gas reservoir (2114);
   - controlling a compressor (2115) connected to the spring element (210);
   - controlling a preload actuator to adjust
      i) gas volume of the spring element (210), and/or
      ii) a mechanical spring preload in the case the spring element (210) includes a first hybrid spring;
   - controlling a link arrangement actuator for adjusting a setting of a link arrangement to which the spring element is connected.
14. Control system (100) according to any preceding embodiments, further configured to adjust the spring element (210) to compensate for gas medium in the spring element (210) being heated during use.
15. Control system (210) according to any preceding embodiments, wherein said spring element includes:
   i) a second gas spring, or
   ii) a second hybrid spring comprising a gas spring and a mechanical spring,
   wherein the first gas spring or first hybrid spring is associated with one of the front suspension and the rear suspension of the bicycle and the second gas spring or second hybrid spring is associated with the other of the front suspension and the rear suspension of the bicycle.
16. Control system (100) according to any preceding embodiments, further adapted such that one or more actuators (2113, 2118) of the control system (100) is capable of maintaining its position in a non-energized state.
17. Control system (100) according to any preceding embodiments, wherein said at least one sensor (120) includes one or more of:
   - an Inertial Measurement Unit, IMU;
   - a Global Positioning System, GPS;
   - a gear switch sensor for sensing a gear switch setting;
   - a pedal torque sensor for sensing a pedal torque;
   - a seat post sensor for sensing a seat post position;
   - a spring element sensor for sensing a setting of the spring element;
   - a sensor for sensing an additional front suspension setting;
   - a sensor for sensing an additional rear suspension setting;
   - a temperature sensor or a pressure sensor for sensing a gas medium state of the gas medium of the spring element;
   - a proximity sensor for sensing a user or a portable user device in proximity of the control system.
18. Suspension system (21) for a bicycle (300), said suspension system (21) comprising:
   - front suspension (21F);
   - rear suspension (21R);
   - a spring element (210) including: i) a gas spring, or ii) a hybrid spring comprising a gas spring and a mechanical spring, which spring element (210) is configured to be adjustable in terms of spring rate and/or spring preload,
   - a control system (100) according to any preceding embodiments.
19. Bicycle (300) comprising the suspension system according to embodiment 18.
20. Method of controlling a suspension system (21) of a bicycle (300), said suspension system (21) including front suspension (21F) and/or rear suspension (21R), the method comprising the steps of:
   - determining a target ride state for the bicycle (300) based on riding event information provided by at least one sensor (120);
   - by means of a control unit (110), sending a suspension setting signal to the front suspension (21F) and/or the rear suspension (21R) to adjust the bicycle (300) to the target ride state, wherein said adjustment involves adjusting a spring element (210) of the front suspension (21F) and/or the rear suspension (21R) in terms of spring rate and/or spring preload, wherein said spring element (210) includes
      i) a first gas spring, or
      ii) a first hybrid spring comprising a gas spring and a mechanical spring.

## Claims

1. Control system (100) for controlling a suspension system (21) for a bicycle (300), the suspension system (21) comprising a front suspension (21F) and a rear suspension (21R), said control system (100) comprising
- a control unit (110);
- at least one sensor (120) connected to said control unit (110), said at least one sensor (120) configured to provide riding event information relating to a riding event of the bicycle (300),
wherein the control unit (110) is configured to:
- determine a target ride state of the bicycle (300) based on said riding event information,
- send a suspension setting signal to the front suspension (21F) and/or the rear suspension (21R) to adjust the bicycle (300) to the target ride state, wherein said adjustment involves adjusting a spring element (210) of the front suspension (21F) and/or the rear suspension (21R) in terms of spring rate and/or spring preload, wherein said spring element (210) includes
i) a first gas spring, or
ii) a first hybrid spring comprising a gas spring and a mechanical spring.

2. Control system (100) according to claim 1, wherein the control unit (110) is configured to determine a current ride state of the bicycle (300) based on:
- sensor information from one or more sensors, and/or
- a historic suspension setting signal.

3. Control system (100) according to any of claims 1-2, wherein said target ride state and/or said current ride state includes one or more of:
- a front suspension sag and/or a rear suspension sag;
- an orientation of the bicycle (300) relative a horizontal plane;
- a front compression damping and/or a front rebound damping;
- a rear compression damping and/or a rear rebound damping.

4. Control system (100) according to any preceding claims, wherein the control unit (110) is configured to:
- determine the target ride state from one or more ride state modes, wherein, optionally, said one or more ride state modes includes one or more of:
- a predefined ride state mode;
- a user defined ride state mode;
- an adaptively defined ride state mode.

5. Control system (100) according to any of the preceding claims, wherein the control unit (110) is configured to:
- determine a riding event from one or more riding events based on said riding event information,
wherein the target ride state of the bicycle (300) is determined based on a determined riding event.

6. Control system (100) according to claim 5, wherein the control unit (110) is configured to:
- determine a time duration of a riding event, and/or
- send out said suspension setting signal at least once for a riding event.

7. Control system (100) according to any of claims 5-6, wherein the control unit (110) is configured to store:
- one or more riding events determined from riding event information provided by the at least one sensor, and
- ride state information associated with said one or more riding events.

8. Control system (100) according to claim 7, wherein the control unit (110) is configured to:
- compare the determined riding event with one or more historic riding events to determine if the determined riding event matches with a historic riding event, said matching being made based on a matching condition, and
- if a match can be identified, provide ride state information associated with the matching historic riding event, and the determining the target ride state of the bicycle is further based on said provided ride state information
wherein, optionally, said comparing the determined riding event with one or more historic riding events includes geolocating the determined riding event with a historic riding event.

9. Control system (100) according to claim 8, wherein the control unit (110) is configured to:
- evaluate a setting of the spring element (210) for a matched historic riding event in at least one aspect, which at least one aspect optionally includes one or more of: i) riding performance, and/or ii) suspension characteristics, and/or iii) user preference, and/or iv) comfort, and/or v) safety,
wherein the control unit (110) is further configured to:
- suggest an adjustment of the spring element setting for the determined riding event based on said evaluation, and/or
- automatically adjust the spring element setting for the identified riding event based on said evaluation.

10. Control system (100) according to any preceding claims, wherein riding event information includes one or more of:
- user information;
- user operation, such as user position relative the bicycle and/or pedaling speed and/or gear switch setting and/or a breaking operation;
- front suspension state and/or rear suspension state;
- front suspension fault and/or rear suspension fault;
- bicycle orientation, such as roll and/or pitch and/or yaw,
- inclination of riding surface;
- condition of riding surface;
- location;
- ambient temperature;
- weather condition;
- time duration.

11. Control system (100) according to any preceding claims, wherein said adjustment of the spring element (210) includes one of, or a combination of:
- controlling a regulating valve (2112) between the spring element (210) and a gas reservoir (2114);
- controlling a compressor (2115) connected to the spring element (210);
- controlling a preload actuator (2113, 2118) to adjust
i) gas volume of the spring element (210), and/or
ii) a mechanical spring preload in the case the spring element (210) includes a first hybrid spring;
- controlling a link arrangement actuator for adjusting a setting of a link arrangement to which the spring element is connected.

12. Control system (100) according to any preceding claims, further configured to adjust the spring element (210) to compensate for gas medium in the spring element being heated during use.

13. Control system (100) according to any preceding claims, wherein said at least one sensor includes one or more of:
- an Inertial Measurement Unit, IMU;
- a Global Positioning System, GPS;
- a gear switch sensor for sensing a gear switch setting;
- a pedal torque sensor for sensing a pedal torque;
- a seat post sensor for sensing a seat post position;
- a spring element sensor for sensing a setting of the spring element;
- a sensor for sensing an additional front suspension setting;
- a sensor for sensing an additional rear suspension setting;
- a temperature sensor or a pressure sensor for sensing a gas medium state of the gas medium of the spring element;
- a proximity sensor for sensing a user or a portable user device in proximity of the control system.

14. Bicycle (300) comprising:
- front suspension (21F);
- rear suspension (21R);
- a spring element (210) including: i) a gas spring, or a ii) hybrid spring comprising a gas spring and a mechanical spring, which spring element (210) is configured to be adjustable in terms of spring rate and/or spring preload,
- a control system (100) according to any preceding claims.

15. Method of controlling a suspension system (21) of a bicycle (300), said suspension system (21) including front suspension (21F) and/or rear suspension (21R), the method comprising the steps of:
- determining a target ride state for the bicycle (300) based on riding event information provided by at least one sensor (120);
- by means of a control unit (110), sending a suspension setting signal to the front suspension (21F) and/or the rear suspension (21R) to adjust the bicycle (300) to the target ride state, wherein said adjustment involves adjusting a spring element (210) of the front suspension (21F) and/or the rear suspension (21R) in terms of spring rate and/or spring preload, wherein said spring element (210) includes
i) a first gas spring, or
ii) a first hybrid spring comprising a gas spring and a mechanical spring.
